# EUROPÄISCHE PATENTSCHRIFT

(11) **EP 3 397 990 B1**
(45) Veröffentlichungstag und Bekanntmachung des Hinweises auf die Patenterteilung: **18.12.2019**
(21) Anmeldenummer: 17712428.6
(22) Anmeldetag: 10.03.2017
(51) Int. Cl.: G01S 13/93, B62D 15/02, G01S 13/89

(54) **VERFAHREN ZUM BETRIEB EINES FAHRERASSISTENZSYSTEMS EINES KRAFTFAHRZEUGS UND KRAFTFAHRZEUG**
METHOD FOR OPERATING A DRIVER ASISTANCE SYSTEM OF A VEHICLE AND VEHICLE
PROCÉDÉ D'OPÉRER UN SYSTÈME D'ASSISTANCE AU CONDUCTEUR D'UN VÉHICULE ET VÉHICULE

(30) Priorität: 17.03.2016 DE 102016003308
(43) Veröffentlichungstag der Anmeldung: 07.11.2018
(73) Patentinhaber: Audi AG, 85045 Ingolstadt (DE)
(72) Erfinder: KHLIFI, Rachid, 85748 Garching (DE)
(86) Internationale Anmeldenummer: PCT/EP2017/055660
(87) Internationale Veröffentlichungsnummer: WO 2017/157787

(56) Entgegenhaltungen:
- EP-A1- 2 439 714
- US-A1- 2014 358 424

## Beschreibung

Die Erfindung betrifft ein Verfahren zum Betrieb eines Fahrerassistenzsystems eines Kraftfahrzeugs, wobei das Fahrerassistenzsystem zur wenigstens teilweise automatischen Führung des Kraftfahrzeugs ausgebildet ist und das Kraftfahrzeug wenigstens einen Radarsensor als das Umfeld des Kraftfahrzeugs erfassenden Umfeldsensor aufweist, dessen Sensordaten zu einem das Umfeld des Kraftfahrzeugs beschreibenden Umfeldmodell ausgewertet werden. Daneben betrifft die Erfindung ein Kraftfahrzeug.

Autonome Fahrfunktionen von modernen Kraftfahrzeugen, mithin die wenigstens teilweise automatische Führung von Kraftfahrzeugen, setzen eine hochqualitative Umfeldwahrnehmung durch entsprechende Umfeldsensoren des Kraftfahrzeugs voraus. Ein wesentlicher, häufig verwendeter Umfeldsensor in Kraftfahrzeugen ist der Radarsensor.

Die Verwendung von Radarsensoren in Kraftfahrzeugen ist im Stand der Technik bereits weitgehend bekannt. Radarsensoren werden heutzutage meist als Umfeldsensoren für einen mittleren und größeren Distanzbereich eingesetzt, um andere Verkehrsteilnehmer oder größere Objekte in Distanz, Winkel und Relativgeschwindigkeit bestimmen zu können. Derartige Radardaten können in Umfeldmodelle eingehen oder auch unmittelbar Fahrzeugsystemen zur Verfügung gestellt werden. Nutzen aus Radardaten ziehen im bekannten Stand der Technik beispielsweise Längsführungssysteme, wie ACC, oder auch Sicherheitssysteme.

Radarsensoren herkömmlicher Bauart weisen meist eine größere Ausdehnung auf und sind eher klobig, nachdem die Antennen sowie die unmittelbar an der Antenne benötigten Elektronikkomponenten, also das Radar-Frontend, in einem Gehäuse integriert sind. Hauptsächlich bilden die Elektronikkomponenten dabei den Radar-Transceiver, der eine Frequenzsteuerung (üblicherweise umfassend eine Phasenregelschleife - PLL), Mischeinrichtungen, einem Low Noise Amplifier (LNA) und dergleichen enthält, oft werden jedoch auch Steuermodule und digitale Signalverarbeitungskomponenten antennennah realisiert, beispielweise um bereits aufbereitete Sensordaten, beispielsweise Objektlisten, auf einen angeschlossenen Bus, beispielsweise einen CAN-Bus, geben zu können.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Um für ein Fahrerassistenzsystem und die wenigstens teilweise automatische Führung des Kraftfahrzeugs, mithin die wenigstens teilweise automatische Querführung und die wenigstens teilweise automatische Längsführung, eine ideal geeignete Grundlage zur Verfügung zu stellen, ist es bekannt, die Sensordaten mehrerer Umfeldsensoren, insbesondere auch mehrerer Radarsensoren, zu fusionieren und ein Umfeldmodell des Kraftfahrzeugs zu ermitteln, das sich üblicherweise auf einen durch die Reichweite der Umfeldsensoren definierten Bereich um das Kraftfahrzeug bezieht und diesen in einer von der Art und Qualität der Sensordaten der Umfeldsensoren abhängigen Weise beschreibt. Dabei sind sowohl objektbasierte Umfeldmodelle bekannt, bei denen das Umfeld durch Objekte mit ihrer relativen Position zum Kraftfahrzeug und diesen zugeordnete Objekteigenschaften beschrieben werden als auch Umfeldmodelle, die den abgedeckten Bereich in einzelne Zellen aufteilen und diesen einen Bewegungszustand und Zusatzinformationen zuordnen (gridbasierter Ansatz). Auch Hybridansätze zwischen diesen beiden Ansätzen sind denkbar und wurden bereits beschrieben. Basierend auf einem derartigen Umfeldmodell können Fahrerassistenzsysteme, die zur wenigstens teilweise automatischen Führung des Kraftfahrzeugs ausgebildet sind, konkrete Längsführungs- und/oder Querführungseingriffe berechnen und/oder auch ganze Trajektorien vorauszuberechnen, an denen sich der weitere Betrieb des Kraftfahrzeugs orientiert. Dabei wird selbstverständlich auch während der Umsetzung einer solchen vorausberechneten Trajektorie, das ständig aktualisierte Umfeldmodell ausgewertet, um auf Veränderungen aktiv reagieren zu können und insbesondere auch Funktionen zur Unfallvermeidung und/oder Unfallfolgenminderung umsetzen zu können.

Fahrerassistenzsysteme sind häufig zumindest teilweise konfigurierbar gestaltet, so dass beispielsweise bestimmte Komfortfunktionen ein- und ausgeschaltet werden können, Warn- und Informationsschwellwerte benutzerseitig gewählt werden können und/oder die Ausgabe von Hinweisinformationen in ihrer Präsentation angepasst werden kann, beispielsweise durch Einstellung der Helligkeit einer optischen Anzeige und/oder der Tonhöhe einer akustischen Anzeige.

Gerade bei solchen Fahrerassistenzsystemen, in denen eine vollständig automatische Führung des Kraftfahrzeugs realisiert werden soll, mithin eine bestmögliche Unterstützung des Fahrers stattfinden soll, existieren äußerst komplexe Verkehrssituationen, in denen die Wahl der Trajektorie durch die schwierige Interpretation von Sensordaten beziehungsweise des Umfeldmodells und/oder auch nicht hinreichende Erfassungseigenschaften der Umfeldsensoren suboptimal sein kann, so dass die Unterstützung des Fahrers nicht auf bestmögliche Art und Weise realisiert werden kann.

US 2014/358424 A1 betrifft ein System und ein Verfahren zur Eingabe eines gewollten Pfades beim Rückwärtsfahren mit einem Anhänger. Davon ausgehend, dass Rückwärtsfahren mit einem Anhänger äußerst schwierig ist, wird vorgeschlagen, eine Vielzahl an Kameras zu verwenden, um Ansichten zu erzeugen, die dies vereinfachen und insbesondere die Planung eines Pfades ermöglichen, wobei alternativ Objekte im Umfeld auch mittels Radar festgestellt werden können. Der Pfad kann dann automatisch abgefahren werden.

Der Erfindung liegt daher die Aufgabe zugrunde, eine Möglichkeit zum Betrieb eines Fahrerassistenzsystems anzugeben, welches unter Nutzung aller verfügbaren Erfassungsressourcen eine verbesserte Bestimmung von Trajektorien zur wenigstens teilweise automatischen Führung des Kraftfahrzeugs erlaubt.

Zur Lösung dieser Aufgabe sind bei einem Verfahren der eingangs genannten Art erfindungsgemäß die Merkmale des Anspruchs 1 vorgesehen.

Der Erfindung liegt somit die Erkenntnis zugrunde, dass der Fahrer besser als die Umfeldsensorik das Umfeld wahrnehmen kann und somit auch seine Wahrnehmungsinformationen berücksichtigt werden sollten. Während bislang davon ausgegangen wird, dass die Fahrerassistenzsysteme den Fahrer unterstützen müssen und nicht umgekehrt, wird nun vorgeschlagen, in bestimmten komplexeren Situationen, die beispielsweise durch die Umfeldsensorik nicht vollständig aufgelöst werden können, durch den Fahrer die Umfeldwahrnehmung zu unterstützen. Mithin wird der Fahrer aktiv im Fahrgeschehen berücksichtigt und es werden ihm Auswahlmöglichkeiten geboten, die die zukünftige Realtrajektorie des Kraftfahrzeugs mit beeinflussen können. Hierzu kann der Fahrer in entsprechenden Situationen über ein Benutzerinterface, gebildet durch die Anzeigeeinrichtung und die Bedieneinrichtung, eine Wunschtrajektorie beschreibende Trajektoriendaten eingeben, wobei ihm als besonders vorteilhafte Hilfestellung und zur Ermöglichung einer intuitiven Verknüpfung von Umfeld und Darstellung am Benutzerinterface eine Umfeldkarte angezeigt wird, mithin eine Darstellung des erfassten Umfelds des Kraftfahrzeugs, die nach Art einer Aufsicht auf den befahrenen Untergrund befahrbare und nicht befahrbare Bereiche angibt. Insbesondere in Fällen, in denen ein gridbasiertes Umfeldmodell, also ein solches, das den erfassten Bereich des Umfelds in Einzelsegmente unterteilt und diesen neben einer Belegtheitsinformation auch weitere Informationen zuordnen kann, lässt sich eine derartige Umfeldkarte leicht erzeugen. Selbstverständlich kann eine derartige Umfeldkarte auch weitergehende, genauere Informationen enthalten, wobei es jedoch bevorzugt ist, die Umfeldkarte möglichst abstrakt und intuitiv erfassbar zu halten.

Hierzu umfasst die Umfeldkarte bevorzugt eine zweidimensionale, einer Aufsicht auf den befahrenen Untergrund entsprechende und in Flächensegmente aufgeteilte Rasterdarstellung, wobei die Flächensegmente je nach Befahrbarkeitszustand unterschiedlich dargestellt werden, beispielsweise also nicht befahrbare Flächensegmente gemäß dem Umfeldmodell in Rot und befahrbare Flächensegmente gemäß dem Umfeldmodell in Weiß. Eine weitere Kennzeichnungsart von Flächensegmenten, beispielsweise die Farbe Gelb, kann optional einem unbekannten Zustand hinsichtlich der Befahrbarkeit zugeordnet sein, beispielsweise bei für die Umfeldsensorik und ggf. weitere Datenquellen verdeckten Bereichen.

Das Rückfragekriterium beschreibt dabei Schwierigkeiten in der Umfelderfassung und/oder Trajektorienbestimmung. Das bedeutet, immer dann, wenn aufgrund einer nicht hinreichenden Umfelderfassung und/oder einer hohen Komplexität der Verkehrssituation eine Trajektorienbestimmung nicht in der üblichen Verlässlichkeit, was beispielsweise anhand eines Schwellwertes beschrieben werden kann, möglich ist, erfolgt eine Rückfrage beim Fahrer. Das Rückfragekriterium ist dabei bevorzugt so ausgestaltet, dass sich diese Rückfragen beim Fahrer auf ein Minimum, also wenige Situationen, in denen dies tatsächlich notwendig ist, beschränkt, wobei entsprechende Schwellwerte selbstverständlich auch fahrerseitig beeinflussbar sein können, was insbesondere bei der vollständig automatischen Führung des Kraftfahrzeugs durch das Fahrerassistenzsystem zweckmäßig sein kann, da der Fahrer sich im Zweifel auch auf häufigere Rückfragen konzentrieren kann. Dabei kann das Rückfragekriterium an drei Stellen ansetzen, nämlich entweder an der Umfeldsensorik selbst (unmittelbare Beurteilung der Umfelderfassung), beim Umfeldmodell (mittelbare Beurteilung der Umfelderfassung) und/oder bei der Trajektorienbestimmung mittels einer Trajektorienermittlungseinheit, die häufig auch Konfidenzwerte und/oder sonstige Informationen zur Verlässlichkeit der Trajektorienbestimmung zurückliefert. Konkret sieht die Erfindung also vor, dass das Rückfragekriterium den Betriebszustand des wenigstens einen Umfeldsensors beschreibende Betriebsdaten und/oder das Umfeldmodell auf eine hinsichtlich der Trajektorienbestimmung unvollständige Umfelderfassung und/oder Ausgabedaten einer Trajektorienermittlungseinheit hinsichtlich einer hinreichend verlässlichen Trajektorienbestimmung auswertet. Wie erwähnt können dabei verschiedene Schwellwerte für diese Sachverhalt beschreibende Größen, beispielsweise Konfidenzwerte, Abdeckungswerte, Qualitätswerte, Fehlerwerte und dergleichen, eingesetzt werden.

In besonders bevorzugter Ausgestaltung der vorliegenden Erfindung wird als Anzeigeeinrichtung ein Touchscreen verwendet. In eine derartige Anzeigeeinrichtung ist dann die Bedieneinrichtung wenigstens teilweise in Form der Berührungssensorik bereits integriert. Ein Touchscreen ermöglicht eine unmittelbare Interaktion mit der auf seinem Display dargestellten Umfeldkarte, so dass beispielsweise auf ihm gezeigte vorausberechnete Trajektorien unmittelbar ausgewählt und/oder verändert werden können und in einer besonders bevorzugten Ausführungsform der vorliegenden Erfindung auch Wunschtrajektorien unmittelbar, insbesondere mit dem Finger, in die Umfeldkarte eingezeichnet werden können. Hierzu bewegt der Benutzer den Finger entlang einer Linie, die den zurückzulegenden Weg entspricht, über den Touchscreen, was häufig auch als "Stroke" bezeichnet wird. Die entsprechenden Daten der Berührungssensorik ergeben dann die Trajektoriendaten, aus denen die Wunschtrajektorie abgeleitet werden kann. So ist eine besonders vorteilhafte Realisierung eines Benutzerinterfaces möglich.

In einer Weiterbildung der Erfindung kann vorgesehen sein, dass als die Anzeigeeinrichtung und die Bedieneinrichtung Komponenten einer nicht zum Kraftfahrzeug gehörigen Mobileinrichtung verwendet werden, insbesondere eines Smartphones. Mithin müssen keine kraftfahrzeugeigenen Anzeigeeinrichtungen beziehungsweise keine kraftfahrzeugeigenen Bedieneinrichtungen verwendet werden, sondern es ist möglich, eine Mobileinrichtung, die mit dem Kraftfahrzeug, konkret dem Fahrerassistenzsystem, kommuniziert, einzusetzen, welche besonders bevorzugt einen als Anzeigeeinrichtung und Bedieneinrichtung zu verwendenden Touchscreen aufweist. Hierbei kann nicht nur vorteilhaft eine dem Fahrer bekannte und von ihm intuitiv bedienbare Mobileinrichtung verwendet werden, was die Flexibilität erhöht, sondern es ist auch denkbar, dass der Fahrer, beispielsweise bei einem Einpark- und/oder Rangiervorgang, gar nicht erst im Kraftfahrzeug befindlich ist, sondern dieses von außerhalb des Kraftfahrzeugs, allerdings mit Blick auf dessen Umfeld, unterstützen kann.

Wie bereits erwähnt, sind zwei grundsätzliche Ausgestaltungen der konkreten Eingabe der Trajektoriendaten denkbar, welche selbstverständlich auch kumulativ eingesetzt werden können. Zum einen ist eine Auswahl unter vorberechneten Auswahltrajektorien denkbar; zum anderen kann der Fahrer, insbesondere durch Freihandzeichnen, als Trajektoriendaten durch Interaktionen mit der Umfeldkarte einen Weg in diese einzeichnen.

Mithin sieht eine erste zweckmäßige Weiterbildung der Erfindung vor, dass eine Mehrzahl möglicher Auswahltrajektorien automatisch ermittelt und dem Fahrer in die Umfeldkarte eingezeichnet zur Auswahl angeboten wird. Wie bereits erwähnt umfassen derartige, zur wenigstens teilweise automatischen Führung des Kraftfahrzeugs ausgebildete Fahrerassistenzsysteme meist eine Trajektorienermittlungseinheit, die mögliche Trajektorien durch eine Verkehrssituation ermittelt und bewertet, wobei dann die am besten bewertete Trajektorie üblicherweise als zu nutzende Realtrajektorie herangezogen wird. Ist aber das Rückfragekriterium erfüllt, ist ein Fall gegeben, in dem entweder die Umfelderfassung und/oder die Trajektorienermittlung keine hinreichende Basisqualität erreicht, was es aber dennoch ermöglicht, beispielsweise eine vorbestimmte Anzahl von bestbewertetsten, in der Trajektorienermittlungseinheit ermittelten Trajektorien als Auswahltrajektorien in der Umfeldkarte darzustellen und dem Fahrer zur Auswahl anzubieten.

Dabei ist es besonders bevorzugt, wenn für verschiedene mögliche Fahrmanöver und/oder Fahrtwege jeweils eine repräsentative Auswahltrajektorie ermittelt wird, insbesondere als hinsichtlich der Sicherheit und/oder des Komforts optimierte Auswahltrajektorie. Trajektorien können mit einer Vielzahl von Variationen für vergleichbare Fahrmanöver und/oder Fahrtwege ermittelt werden, beispielsweise für ein Wenden in zwei Zügen und ein Wenden in mehr als zwei Zügen und/oder das Umfahren eines Hindernisses auf der rechten oder der linken Seite. Entsprechend ist es möglich, verschiedene denkbare Trajektorien zu klassifizieren und für derartige Trajektorienklassen jeweils eine repräsentative Auswahltrajektorie zur Anzeige vorzusehen, die insbesondere bereits hinsichtlich der Sicherheit und/oder des Komforts optimiert ermittelt ist, so dass sie, falls nicht Änderungen im Umfeld des Kraftfahrzeugs auftreten, unmittelbar als Realtrajektorie verwendet werden kann. Insbesondere kann die Trajektorienermittlungseinheit, wie sie bereits erwähnt wurde, derart ausgebildet sein, dass sie unter den bestbewertesten Trajektorien ohnehin nur solche vorhält, die repräsentativ für eine durch ein Fahrmanöver und/oder eine Fahrtweg definierte Trajektorienklasse sind.

In einer besonders bevorzugten Ausgestaltung kann zu jeder Auswahltrajektorie ein die Kritikalität des Abfahrens der Trajektorie beschreibender Kritikalitätswert ermittelt werden, wobei die Anzeige der Auswahltrajektorien in Abhängigkeit des Kritikalitätswerts erfolgt, insbesondere durch Einfärbung gemäß dem Kritikalitätswert. Gerade dann, wenn Trajektorien auch hinsichtlich der Sicherheit optimiert ermittelt werden, lässt sich diesen ein Kritikalitätswert zuordnen, der üblicherweise das verbleibende kleine Restrisiko von Schwierigkeiten beim Abfahren der entsprechenden Trajektorie angibt. Dieser Schwierigkeitsgrad der einzelnen Auswahltrajektorien kann nun auch dem Fahrer visualisiert werden, wobei beispielsweise verschiedene Farbkodierungen eingesetzt werden können. Insbesondere kann vorgesehen sein, dass in den Kritikalitätswert, ggf. zusätzlich, ein im Rahmen des Rückfragekriteriums ermittelter Erfassungswert eingeht, der letztlich beschreibt, wie stark die entsprechende Auswahltrajektorie von den Problemen bei der Umfelderfassung beziehungsweise der Trajektorienermittlung betroffen ist, beispielsweise, ob sie nicht erfasste Subbereiche des Umfelds berührt beziehungsweise durchquert und/oder von einem besonders schwer einzuschätzenden Anteil der komplexen Verkehrssituation betroffen ist. Damit kann dem Benutzer auch der Bezug auf die Rückfrage intuitiv vermittelt werden.

Wurde eine der dargestellten Auswahltrajektorien durch den Fahrer ausgewählt, sieht eine zweckmäßige Ausgestaltung der Erfindung vor, dass eine von dem Fahrer als die Wunschtrajektorie ausgewählte Auswahltrajektorie unterscheidbar von den anderen Auswahltrajektorien dargestellt wird. Auf diese Weise wird dem Fahrer visuell die Eingabe von Trajektoriendaten bestätigt und intuitiv vermittelt. Beispielsweise können nicht ausgewählte Auswahltrajektorien gestrichelt in der Umfeldkarte dargestellt werden, während eine ausgewählte Auswahltrajektorie als durchgezogene Linie wiedergegeben wird. Auch eine farblich unterschiedliche Wiedergabe und/oder Unterschiede in der Linienstärke bei der Darstellung in der Umfeldkarte können herangezogen werden.

Alternativ oder zusätzlich sieht eine zweite, besonders bevorzugte Ausgestaltung vor, dass die Bedieneinrichtung zur Entgegenahme von einen Weg von einer in der Umfeldkarte dargestellten Fahrzeugposition durch befahrbare Bereiche beschreibenden Wegdaten als Trajektoriendaten, insbesondere durch Überstreichen eines Weges auf dem Touchscreen, betrieben wird, wobei die Wunschtrajektorie durch die Wegdaten beschrieben wird. Dabei zeichnet also der Fahrer seine Wunschtrajektorie letztlich gezielt in die Umfeldkarte, die auch die aktuelle Position des Kraftfahrzeugs visualisiert, ein. Idealerweise geschieht dies durch Einzeichnen mit dem Finger auf einem Touchscreen. Bevorzugt wird die eingezeichnete Wunschtrajektorie und/oder eine daraus abgeleitete Realtrajektorie für den Fahrer dann auch auf der Anzeigeeinrichtung visualisiert. Dabei sei an dieser Stelle angemerkt, dass es selbstverständlich ausreichend ist, wenn der Fahrer eine grobe Leitlinie für die konkret zu nutzende Realtrajektorie angibt, beispielsweise einen Weg einzeichnet, der eine Trajektorienklasse definiert, die durch ein Fahrtmanöver und/oder einen Fahrtweg definiert sein kann. Das Fahrerassistenzsystem ist dann in der Lage, hieraus eine sinnvolle, tatsächlich zu fahrende Realtrajektorie abzuleiten bzw. zu nutzen, bevorzugt nach einer bestätigenden Eingabe des Fahrers, das die visualisierte, aus den Wegdaten ableitbare Wunschtrajektorie auch tatsächlich als der gewollten Wunschtrajektorie entspricht. Es kann mithin zweckmäßiger Weise vorgesehen sein, dass die durch die Wegdaten beschriebene Wunschtrajektorie unter Berücksichtigung des Umfeldmodells einem Wunschfahrmanöver und/oder einem Wunschfahrweg zugeordnet wird, zu dem beziehungsweise denen die Realtrajektorie als hinsichtlich der Sicherheit und/oder des Komforts optimiert ermittelt wird.

Dabei sei an dieser Stelle noch angemerkt, dass selbstverständlich auch im erfindungsgemäßen Verfahren während des Abfahrens der ermittelten Realtrajektorie ständig weiter das Umfeldmodell, insbesondere also die aktuellen Sensordaten, ausgewertet wird, so dass ein Abbruch der Realtrajektorie erfolgen kann, wenn beispielsweise ein Hindernis im Fahrkorridor erscheint und dergleichen.

Wie einleitend dieser Beschreibung bereits erläutert wurde, existieren inzwischen auf Halbleitertechnologie basierende Ausgestaltungen von Radarsensoren, die eine äußerst exakte Erfassung des Umfelds des Kraftfahrzeugs ermöglichen. Insbesondere kann auch im Rahmen der vorliegenden Erfindung vorgesehen sein, dass als Radarsensor ein Radarsensor mit einem einen Radartransceiver realisierenden Halbleiterchip, insbesondere CMOS-Chip, verwendet wird. Durch den Halbleiterchip des Radarsensors können auch eine digitale Signalverarbeitungskomponente (DSP) des Radarsensors und/oder eine Steuereinheit des Radarsensors realisiert sein und/oder der Halbleiterchip und eine Antennenanordnung des Radarsensors können als ein Package realisiert sein. Auf diese Weise lässt sich ein äußerst kleinbauender Radarsensor mit einem hervorragenden Signal-zu-Rauschverhältnis realisieren, mit dem hochgenau das Umfeld des Kraftfahrzeug abgetastet werden kann. Besonders zweckmäßig ist es in diesem Zusammenhang, wenn mehrere Radarsensoren verwendet werden, deren Erfassungsbereiche das Umfeld des Kraftfahrzeugs in einem 360°-Radius abdecken. Dabei können beispielsweise acht Radarsensoren verwendet werden, von denen beispielsweise drei im vorderen Stoßfänger, drei im hinteren Stoßfänger und zwei seitlich, insbesondere in den Türen des Kraftfahrzeugs, verbaut sein können. Allgemein werden bevorzugt Weitwinkel-Radarsensoren eingesetzt. Die Radarsensoren können bevorzugt mit einer hohen Frequenzbandbreite, die größer als 1 GHz ist, vorzugsweise 4 GHz beträgt, betrieben werden, da sich dann eine hervorragende Winkel- und Abstandauflösung ergibt. Insbesondere ermöglicht die Verwendung solcher hochauflösender, kleinbauender Radarsensoren auf Halbleiterbasis auch in besonders vorteilhafter Weise, dass das Umfeldmodell ausschließlich aus Sensordaten des wenigstens einen Radarsensors ermittelt werden kann. Mithin basiert auch die Umfeldkarte in diesem Fall allein auf den Sensordaten der Radarsensoren.

Eine weitere bevorzugte Ausbildung der vorliegenden Erfindung sieht vor, dass die Umfeldkarte nur einen Unterbereich des von dem Umfeldmodell abgedeckten Bereichs wiedergibt, wobei die Größe des Unterbereichs in Abhängigkeit von der aktuellen Fahrsituation gewählt wird. Insbesondere können dann, wenn sich die Fahrsituation nicht nur auf enge Bereiche, beispielsweise einen benachbarten Parkplatz, bezieht, sondern beispielsweise auf eine komplexere, großräumigere Verkehrssituation wie eine Kurve oder einen mit Hindernissen belegten Straßenabschnitt, auch größere Unterbereiche visualisiert werden.

Neben dem Verfahren betrifft die Erfindung auch ein Kraftfahrzeug, aufweisend wenigstens einen Radarsensor als Umfeldsensor und ein Fahrerassistenzsystem mit einer zur Durchführung des erfindungsgemäßen Verfahrens ausgebildeten Steuereinrichtung, die hier insbesondere wenigstens teilweise als ein Steuergerät realisiert sein kann. Sämtliche Ausführungen bezüglich des erfindungsgemäßen Verfahrens lassen sich analog auf das erfindungsgemäße Kraftfahrzeug übertragen, so dass auch mit diesem die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: einen Ablaufplan eines Ausführungsbeispiels des erfindungsgemäßen Verfahrens,
- Fig. 2: eine erste mögliche Darstellung einer Umfeldkarte,
- Fig. 3: eine zweite mögliche Darstellung einer Umfeldkarte,
- Fig. 4: ein erfindungsgemäßes Kraftfahrzeug, und
- Fig. 5: eine Prinzipskizze eines Radarsensors.

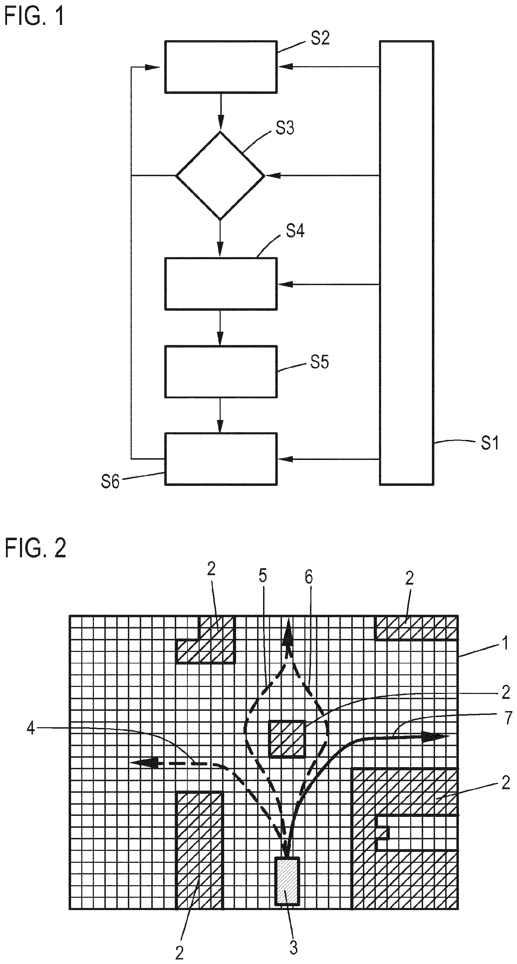

Fig. 1 zeigt einen Ablaufplan eines Ausführungsbeispiels des erfindungsgemäßen Verfahrens, wie es zum Betrieb eines Fahrerassistenzsystems eingesetzt wird, das vorliegend zur vollständig automatischen Führung des Kraftfahrzeugs entlang von Realtrajektorien ausgebildet ist. Die Realtrajektorien werden dabei aus einem Umfeldmodell abgeleitet, in dem wiederum die Sensordaten verschiedener Umfeldsensoren des Kraftfahrzeugs fusioniert sind, um den durch die Umfeldsensoren insgesamt erfassten Bereich des Umfelds des Kraftfahrzeugs zu beschreiben. Die Umfeldsensoren umfassen vorliegend mehrere Radarsensoren in CMOS-Technologie derart, dass das komplette Umfeld des Kraftfahrzeugs in einem 360°-Radius durch deren Erfassungsbereiche abgedeckt wird. Daher ist es möglich, dass das Umfeldmodell allein basierend auf Sensordaten der hochauflösenden Radarsensoren ermittelt wird, denkbar ist jedoch auch, die Sensordaten weiterer Umfeldsensoren, beispielsweise von Kameras, zu berücksichtigen. Die Ermittlung und Aktuellhaltung des Umfeldmodells, welche andauernd erfolgt, ist in Fig. 1 durch einen Schritt S1 symbolisiert.

Ein Schritt S2 symbolisiert den normalen, üblichen Betrieb des Fahrerassistenzsystems, ohne dass es einer Interaktion mit dem Benutzer, also dem Fahrer, bedürfte. Jedoch wird während des Betriebs des Fahrerassistenzsystems regelmäßig in einem Schritt S3 ein Rückfragekriterium überprüft, das im Wesentlichen anzeigt, ob sich die Trajektorienermittlung aufgrund einer qualitativ schlechteren Umfelderfassung und/oder einer äußerst komplexen Verkehrssituation nicht mit der gewohnten, hinreichenden Qualität durchführen lässt. Hierzu wertet das Rückfragekriterium den Betriebszustand der Umfeldsensoren beschreibende Betriebsdaten und das Umfeldmodell auf eine hinsichtlich der Trajektorienbestimmung unvollständige Umfelderfassung und zudem Ausgabedaten einer Trajektorienermittlungseinheit hinsichtlich einer hinreichend verlässlichen Trajektorienbestimmung aus. Geeignete Größen wie Konfidenzwerte und/oder Qualitätswerte können dabei mit Schwellwerten verglichen werden.

Ist das Rückfragekriterium im Schritt S3 nicht erfüllt, wird mit dem üblichen Betrieb des Fahrerassistenzsystem im Schritt S2 fortgefahren.

Ist jedoch das Rückfragekriterium erfüllt, sollen Informationen vom Fahrer des Kraftfahrzeugs eingeholt werden. Hierzu wird zunächst im Schritt S4 eine dem Fahrer auf einer Anzeigeeinrichtung, hier einem Touchscreen, der mithin auch eine integrierte Bedieneinrichtung umfasst, darzustellende Umfeldkarte ermittelt. Die Umfeldkarte wird aus dem Umfeldmodell abgeleitet und gibt entsprechend einer Aufsicht auf den befahrenen Untergrund aufgrund des Umfeldmodells als befahrbar und nicht befahrbar markierte Bereiche wieder, wobei eine Ausgestaltung auch vorsehen kann, dass auch Bereiche, zu denen keine Informationen im Umfeldmodell vorliegen, mithin unbekannte Bereiche, erkennbar und unterscheidbar markiert werden. Die Umfeldkarte kann sich hierbei auf einen Unterbereich des von dem Umfeldmodell abgedeckten Bereichs beziehen, der abhängig von der aktuellen Verkehrssituation und deren relevanter Skala ermittelt werden kann. Die Umfeldkarte lässt insbesondere auch die aktuelle Position und Ausrichtung des Kraftfahrzeugs, also die Fahrzeugposition, erkennen. Sie kann mithin als eine zweidimensionale Belegungskarte aufgefasst werden, die vom Fahrer intuitiv in Zusammenhang mit dem von ihm visuell wahrgenommenen Umfeld des Kraftfahrzeugs gesetzt werden kann.

Eine Ausführungsform des erfindungsgemäßen Verfahrens sieht im Schritt S4 zudem vor, Auswahltrajektorien, die dem Fahrer zur möglichen Auswahl ebenso visuell dargestellt werden sollen, im Schritt S4 zu ermitteln. Bevorzugt werden hierbei die bestbewertesten, durch die Trajektorienermittlungseinheit betrachteten Trajektorien herangezogen, womit üblicherweise auch für verschiedene mögliche Fahrmanöver und/oder Fahrtwege, die Trajektorienklassen definieren können, jeweils eine repräsentative Auswahltrajektorie vorliegt, die hinsichtlich der Sicherheit und/oder des Komforts optimiert ist. Zu jeder dieser Auswahltrajektorien wird auch eine die Kritikalität des Abfahrens der Trajektorien beschreibender Kritikalitätswert ermittelt, der ebenso in die anzuzeigende Darstellung eingeht, vorliegend durch eine Farbkodierung, wobei Auswahltrajektorien hohen Kritikalitätswerts in Rot, Auswahltrajektorien mittleren Kritikalitätswerts in Gelb und Auswahltrajektorien niedrigen Kritikalitätswerts in Grün dargestellt werden können. In den Kritikalitätswert geht hierbei auch ein im Rahmen des Rückfragekriteriums ermittelter Erfassungswert ein, so dass beispielsweise Auswahltrajektorien, die durch nicht oder nur schlecht erfassbare Bereiche führen, kritischer bewertet werden können.

In einem Schritt S5 erfolgt dann die Anzeige der Umfeldkarte und gegebenenfalls der Auswahltrajektorien an der Anzeigeeinrichtung, hier dem Touchscreen, wobei auch ein Touchscreen einer nicht kraftfahrzeugeigenen Mobileinrichtung, beispielsweise eines Smartphones des Fahrers, als Anzeige- und Bedieneinrichtung verwendet werden kann, wobei dann eine entsprechende Kommunikationsverbindung zwischen dem Fahrzeugsystem und der Mobileinrichtung besteht. In jedem Fall kann durch Interaktion mit der dargestellten Umfeldkarte und gegebenenfalls den dargestellten Auswahltrajektorien fahrerseitig eine Eingabe von Trajektoriendaten erfolgen, die eine Wunschtrajektorie des Fahrers beschreiben. Hierzu kann er zum einen, wenn Auswahltrajektorien dargestellt werden, durch Interaktion mit diesen, beispielsweise Antippen einer Auswahltrajektorie, diese als Wunschtrajektorie auswählen. Die ausgewählte Trajektorie wird dann zur visuellen Bestätigung unterscheidbar von den verbliebenen Auswahltrajektorien dargestellt.

Dies ist beispielhaft in der Prinzipdarstellung der Fig. 2 erläutert, die eine darzustellende Umfeldkarte 1 wiedergibt. Gestrichelt markierte Flächenelemente 2 zeigen nicht befahrbare Bereiche an, eine vereinfachte Wiedergabe 3 des Kraftfahrzeugs dessen aktuelle Position und Ausrichtung. Ersichtlich sind auch eine Mehrzahl von Auswahltrajektorien 4, 5, 6 und 7 zu erkennen, die verschiedenen Fahrmanövern und/oder Fahrtwegen zugeordnet sind, mithin repräsentativ für Trajektorienklassen sind. Beispielsweise beschreibt die Auswahltrajektorie 4 ein Abbiegen nach links, die Auswahltrajektorien 5 und 6 ein Umfahren eines Hindernisses auf der linken beziehungsweise rechten Seite und die Auswahltrajektorie 7 ein Abbiegen nach rechts. Die Auswahltrajektorie 7 ist durchgezogen dargestellt, die Auswahltrajektorien 4, 5 und 6 strichliert, was bedeutet, dass die Auswahltrajektorie 7 hier vom Fahrer ausgewählt wurde.

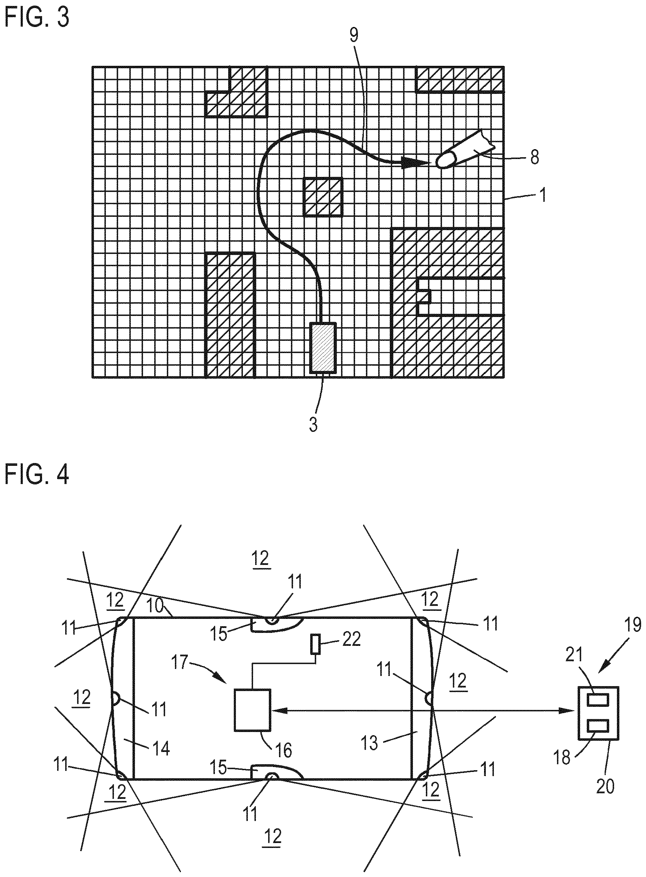

Fig. 3 zeigt eine bevorzugte Ausführungsform, in der wiederum die Umfeldkarte 1 zu sehen ist. Vorliegend sind keine Auswahltrajektorien 4 bis 7 dargestellt, obwohl dies grundsätzlich denkbar wäre. Mittels eines schematisch dargestellten Fingers 8 hat der Fahrer hier durch Überstreichen des Touchscreens und Interaktion mit der Umfeldkarte 1 eine Linie eingezeichnet, deren Verlauf seine Wunschtrajektorie 9 wiedergibt, da er dies aufgrund seiner eigenen Umfeldwahrnehmung als sicherste Möglichkeit ansieht. Die Linie wird durch Wegdaten als Trajektoriendaten beschreiben. Die vom Fahrer mit dem Finger 8 entlang eines "Stroke" eingezeichnete Wunschtrajektorie 9 sieht vor, das mittige Hindernis links zu umfahren und dennoch nach rechts abzubiegen. Auf diese Weise kann der Fahrer unterstützend zur Umfeldsensorik Wunschtrajektorien vorgeben, die aufgrund der eingeschränkten Umfeldwahrnehmung beziehungsweise der komplexen Fahrsituation im Fahrerassistenzsystem nicht oder nur schlecht bewertet aufgetreten sind, obwohl sie die geeignetste Möglichkeit darstellen. Dabei muss die Wunschtrajektorie 9 durch den "Stroke", der Wegdaten als Trajektoriendaten generiert, nur grob vorgegeben werden, da sich die tatsächlich abzufahrende Trajektorie (Realtrajektorie) zwar an der Trajektorienklasse orientiert, diese aber in einem Schritt S6 hinsichtlich der Sicherheit und des Komforts optimiert ermittelt wird, so dass der normale Betrieb des Fahrerassistenzsystems dann im Schritt S2 mit der derart ermittelten Realtrajektorie fortgeführt werden kann. Im Fall von vorgegebenen Auswahltrajektorien können diese bereits bezüglich der Sicherheit und des Komforts optimiert sein, so dass dann die Wunschtrajektorie unmittelbar als Realtrajektorie übernommen werden kann, im Beispiel der Fig. 2 die Auswahltrajektorie 7.

Fig. 4 zeigt eine Prinzipskizze eines erfindungsgemäßen Kraftfahrzeugs 10. Dieses weist acht Radarsensoren 11 auf, die allesamt als Weitwinkel-Radarsensoren auf CMOS-Basis ausgebildet sind, so dass ihre Erfassungsbereiche 12 das Umfeld des Kraftfahrzeugs 10 in einem 360°-Radius abdecken. Jeweils drei Radarsensoren sind dabei in einem vorderen Stoßfänger 13 beziehungsweise einem hinteren Stoßfänger 14 verbaut, die beiden seitlichen Radarsensoren 11 in Türen 15 hinter einem radardurchlässigen Fenster.

Die Radarsensoren 11 liefern ihre Sensordaten an ein Steuergerät 16 eines Fahrerassistenzsystems 17, wobei das Steuergerät 16 als Steuereinrichtung oder Teil einer Steuereinrichtung zur Durchführung des erfindungsgemäßen Verfahrens ausgebildet ist. Dabei kann ein Teil der Steuereinrichtung auch durch eine Steuereinheit 18 einer Mobileinrichtung 19, hier einem Smartphone 20, gebildet werden, dessen Touchscreen 21 als Anzeigeeinrichtung und Bedieneinrichtung genutzt wird. Selbstverständlich kann auch im Kraftfahrzeug 10 selbst eine entsprechende kombinierte Anzeige- und Bedieneinrichtung in Form eines Touchscreens 22, der mit dem Steuergerät 16 verbunden ist, vorhanden sein und genutzt werden.

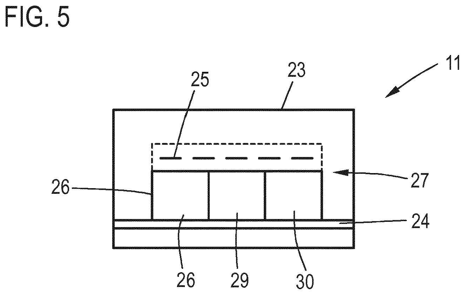

Fig. 5 zeigt schließlich ein konkretes Ausführungsbeispiel von im Kraftfahrzeug 10 einsetzbaren Radarsensoren 11. Der dort dargestellte Radarsensor 11 weist hierzu eine in einem Gehäuse 23 gehalterte Leiterplatte 24 auf, auf der ein eine Antennenanordnung 25 und einen Halbleiterchip 26, hier einen CMOS-Chip, des Radarsensors 11 realisierendes Package 27 angeordnet ist. Durch den Halbleiterchip 26 werden neben einem Radartransceiver 28 auch eine digitale Signalverarbeitungskomponente 29 und eine Steuereinheit 30 des Radarsensors 11 realisiert.

## Patentansprüche

1. Verfahren zum Betrieb eines Fahrerassistenzsystems (17) eines Kraftfahrzeugs (10), wobei das Fahrerassistenzsystem (17) zur wenigstens teilweise automatischen Führung des Kraftfahrzeugs (10) ausgebildet ist und das Kraftfahrzeug (10) wenigstens einen Radarsensor (11) als das Umfeld des Kraftfahrzeugs (10) erfassenden Umfeldsensor aufweist, dessen Sensordaten zu einem das Umfeld des Kraftfahrzeugs (10) beschreibenden Umfeldmodell ausgewertet werden, wobei bei Erfüllung wenigstens eines Rückfragekriteriums dem Fahrer des Kraftfahrzeugs (10) auf einer Anzeigeeinrichtung eine aus dem Umfeldmodell abgeleitete, entsprechend einer Aufsicht befahrbare und nicht befahrbare Bereiche darstellende Umfeldkarte (1) dargestellt wird, wobei bei einer durch eine Bedieneinrichtung ermöglichten Interaktion des Fahrers mit der dargestellten Umfeldkarte (1) eine Wunschtrajektorie (9) des Fahrers beschreibende Trajektoriendaten ermittelt werden und die wenigstens teilweise automatische Führung des Kraftfahrzeugs (10) entlang einer aus den Trajektoriendaten abgeleiteten Realtrajektorie erfolgt,
**dadurch gekennzeichnet,**
**dass** das Rückfragekriterium den Betriebszustand des wenigstens einen Umfeldsensors beschreibende Betriebsdaten und/oder das Umfeldmodell auf eine hinsichtlich der Trajektorienbestimmung unvollständige Umfelderfassung und/oder Ausgabedaten einer Trajektorienermittlungseinheit, die automatisch mögliche Trajektorien durch eine Verkehrssituation ermittelt und bewertet, hinsichtlich einer hinreichend verlässlichen Trajektorienbestimmung auswertet.

2. Verfahren nach Anspruch 1,
**dadurch gekennzeichnet,**
**dass** als Anzeigeeinrichtung ein Touchscreen (21, 22) verwendet wird und/oder als die Anzeigeeinrichtung und die Bedieneinrichtung Komponenten einer nicht zum Kraftfahrzeug (10) gehörigen Mobileinrichtung (19) verwendet werden.

3. Verfahren nach einem der vorangehenden Ansprüche,
**dadurch gekennzeichnet,**
**dass** eine Mehrzahl möglicher Auswahltrajektorien (4, 5, 6, 7) automatisch ermittelt wird und dem Fahrer in die Umfeldkarte (1) eingezeichnet zur Auswahl angeboten wird.

4. Verfahren nach Anspruch 3,
**dadurch gekennzeichnet,**
**dass** für verschiedene mögliche Fahrmanöver und/oder Fahrtwege jeweils eine repräsentative Auswahltrajektorie (4, 5, 6, 7) ermittelt wird.

5. Verfahren nach Anspruch 3 oder 4,
**dadurch gekennzeichnet,**
**dass** zu jeder Auswahltrajektorie (4, 5, 6, 7) ein die Kritikalität des Abfahrens der Trajektorie beschreibender Kritikalitätswert ermittelt wird, wobei die Anzeige der Auswahltrajektorien (4, 5, 6, 7) in Abhängigkeit des Kritikalitätswerts erfolgt.

6. Verfahren nach einem der Ansprüche 3 bis 5,
**dadurch gekennzeichnet,**
**dass** eine von dem Fahrer als die Wunschtrajektorie (9) ausgewählte Auswahltrajektorie (4, 5, 6, 7) unterscheidbar von den anderen Auswahltrajektorien (4, 5, 6, 7) dargestellt wird.

7. Verfahren nach einem der vorangehenden Ansprüche,
**dadurch gekennzeichnet,**
**dass** die Bedieneinrichtung zur Entgegennahme von einen Weg von einer in der Umfeldkarte (1) dargestellten Fahrzeugposition durch befahrbare Bereiche beschreibenden Wegdaten als Trajektoriendaten betrieben wird, wobei die Wunschtrajektorie (9) aus den Wegdaten ermittelt wird.

8. Verfahren nach Anspruch 7,
**dadurch gekennzeichnet,**
**dass** die aus den Wegdaten beschriebene Umfeldtrajektorie unter Berücksichtigung des Umfeldmodells einem Wunschfahrmanöver und/oder einem Wunschfahrweg zugeordnet wird, zu dem bzw. denen die Realtrajektorie als hinsichtlich der Sicherheit und/oder des Komforts optimiert ermittelt wird.

9. Verfahren nach einem der vorangehenden Ansprüche,
**dadurch gekennzeichnet,**
**dass** das Umfeldmodell ausschließlich aus Sensordaten des wenigstens einen Radarsensors (11) ermittelt wird.

10. Kraftfahrzeug (10), aufweisend wenigstens einen Radarsensor (11) und ein Fahrerassistenzsystem (17) mit einer zur Durchführung eines Verfahrens nach einem der vorangehenden Ansprüche ausgebildeten Steuereinrichtung.

## Claims

1. Method for operating a driver assistance system (17) of a vehicle (10), wherein the driver assistance system (17) is designed for the at least partially automatic guidance of the vehicle (10) and the vehicle (10) has at least one radar sensor (11) as environment sensor detecting the environment of the vehicle (10), the sensor data of which are evaluated to form an environment model describing the environment of the vehicle (10), wherein when at least one query criterion is fulfilled, an environment map (1) derived from the environment model, representing according to a top view driveable and non-driveable regions is displayed on a display device to the driver of the vehicle (10), wherein in the case of an interaction, facilitated by means of an operating apparatus, of the driver with the represented environment map (1) trajectory data describing a desired trajectory (9) of the driver are determined and the at least partially automatic guidance of the vehicle (10) takes place along a real trajectory derived from the trajectory data,
**characterised in**
**that** the query criterion evaluates, with respect to a sufficiently reliable trajectory determination, operating data describing the operating state of the at least one environment sensor and/or the environment model in case of an environment detection which is incomplete with respect to the trajectory determination and/or output data of a trajectory detecting unit, which detects and evaluates possible trajectories through a traffic situation.

2. Method according to claim 1,
**characterised in**
**that** as a display device a touchscreen (21, 22) is used and/or as the display device and the operating apparatus components of a mobile device (19) not belonging to the vehicle (10) are used.

3. Method according to any of the preceding claims,
**characterised in**
**that** a plurality of possible selection trajectories (4, 5, 6, 7) is determined automatically and is offered to the driver for selection marked into the environment map (1).

4. Method according to claim 3,
**characterised in**
**that** for different possible driving manoeuvres and/or driving routes respectively one representative selection trajectory (4, 5, 6, 7) is determined.

5. Method according to claim 3 or 4,
**characterised in**
**that** for each selection trajectory (4, 5, 6, 7) a criticality value describing the criticality of the driving of the trajectory is determined, wherein the displaying of the selection trajectories (4, 5, 6, 7) takes place depending on the criticality value.

6. Method according to any of claims 3 to 5,
**characterised in**
**that** a selection trajectory (4, 5, 6, 7) selected by the driver as the desired trajectory (9) is represented able to be differentiated from the other selection trajectories (4, 5, 6, 7).

7. Method according to any of the preceding claims,
**characterised in**
**that** the operating apparatus is operated for the reception of route data as trajectory data describing a route from a vehicle position shown in the environment map (1) via driveable regions, wherein the desired trajectory (9) is determined from the route data.

8. Method according to claim 7,
**characterised in**
**that** the environment trajectory described from the route data is assigned, under consideration of the environment model, to a desired driving manoeuvre and/or a desired driving route, to which the real trajectory is determined as optimised with respect to safety and/or comfort.

9. Method according to any of the preceding claims,
**characterised in**
**that** the environment model is determined exclusively from sensor data of the at least one radar sensor (11).

10. Vehicle (10) having at least one radar sensor (11) and one driver assistance system (17) having a control device configured to carry out a method according to any of the preceding claims.

## Revendications

1. Procédé de fonctionnement d'un système d'assistance au conducteur (17) d'un véhicule automobile (10), dans lequel le système d'assistance au conducteur (17) est réalisé pour le guidage au moins partiellement automatique du véhicule automobile (10) et le véhicule automobile (10) présente au moins un capteur radar (11) en tant que capteur d'environnement détectant l'environnement du véhicule automobile (10), dont les données de capteur sont exploitées en un modèle d'environnement décrivant l'environnement du véhicule automobile (10), dans lequel lors de la satisfaction d'au moins un critère de demande, une carte d'environnement (1) déduite du modèle d'environnement, représentant selon une vue de dessus des zones carrossables et non carrossables est présentée au conducteur du véhicule automobile (10) sur un dispositif d'affichage, dans lequel lors d'une interaction, permise par un dispositif de contrôle, du conducteur avec la carte d'environnement représentée (1), des données de trajectoire décrivant une trajectoire souhaitée (9) du conducteur sont déterminées et le guidage au moins partiellement automatique du véhicule automobile (10) a lieu le long d'une trajectoire réelle déduite des données de trajectoire,
**caractérisé en ce**
**que** le critère de demande exploite des données de fonctionnement décrivant l'état de fonctionnement de l'au moins un capteur d'environnement et/ou le modèle d'environnement quant à une détection d'environnement incomplète en ce qui concerne la détermination de trajectoire et/ou des données d'émission d'une unité de détermination de trajectoire, qui détermine et évalue automatiquement de possibles trajectoires par le biais d'une situation de circulation, en ce qui concerne une détermination de trajectoire suffisamment fiable.

2. Procédé selon la revendication 1
**caractérisé en ce**
**qu'**un écran tactile (21, 22) est utilisé en tant que dispositif d'affichage et/ou des composants d'un dispositif mobile (19) n'appartenant pas au véhicule automobile (10) sont utilisés en tant que dispositif d'affichage et dispositif de contrôle.

3. Procédé selon l'une quelconque des revendications précédentes,
**caractérisé en ce**
**qu'**une pluralité de trajectoires de sélection possibles (4, 5, 6, 7) est déterminée automatiquement et est proposée au choix au conducteur en étant dessinée sur la carte d'environnement (1).

4. Procédé selon la revendication 3,
**caractérisé en ce**
**que** respectivement une trajectoire de sélection représentative (4, 5, 6, 7) est déterminée pour différentes manœuvres de conduite et/ou trajets possibles.

5. Procédé selon la revendication 3 ou 4,
**caractérisé en ce**
**qu'**une valeur de criticité décrivant la criticité du parcours de la trajectoire est déterminée pour chaque trajectoire de sélection (4, 5, 6, 7), dans lequel l'affichage des trajectoires de sélection (4, 5, 6, 7) a lieu en fonction de la valeur de criticité.

6. Procédé selon l'une quelconque des revendications 3 à 5,
**caractérisé en ce**
**qu'**une trajectoire de sélection (4, 5, 6, 7) sélectionnée par le conducteur en tant que trajectoire souhaitée (9) est représentée de manière distinguable des autres trajectoires de sélection (4, 5, 6, 7).

7. Procédé selon l'une quelconque des revendications précédentes,
**caractérisé en ce**
**que** le dispositif de contrôle fonctionne pour la réception de données de trajet décrivant un chemin d'une position de véhicule représentée sur la carte d'environnement (1) par des zones carrossables en tant que données de trajectoire, dans lequel la trajectoire souhaitée (9) est déterminée à partir des données de trajet.

8. Procédé selon la revendication 7,
**caractérisé en ce**
**que** la trajectoire d'environnement décrite à partir des données de trajet en tenant compte du modèle d'environnement est associée à une manœuvre de conduite souhaitée et/ou à un trajet de conduite souhaité, pour lequel ou lesquels la trajectoire réelle est déterminée de manière optimisée en ce qui concerne la sécurité et/ou le confort.

9. Procédé selon l'une quelconque des revendications précédentes,
**caractérisé en ce**
**que** le modèle d'environnement est déterminé exclusivement à partir des données de capteur de l'au moins un capteur radar (11).

10. Véhicule automobile (10), présentant au moins un capteur radar (11) et un système d'assistance au conducteur (17) avec un dispositif de commande réalisé pour la mise en œuvre d'un procédé selon l'une quelconque des revendications précédentes.
